# EUROPEAN PATENT SPECIFICATION

(11) **EP 4 306 626 B1**
(45) Date of publication and mention of the grant of the patent: **06.05.2026**
(21) Application number: 22187120.5
(22) Date of filing: 27.07.2022
(51) Int. Cl.: C11D 3/37, C11D 3/00, C11D 11/00

(54) **LAUNDRY DETERGENT COMPOSITION CONTAINING GRAFT COPOLYMER AND DYE TRANSFER INHIBITOR POLYMER**
WASCHMITTELZUSAMMENSETZUNG MIT PFROPFCOPOLYMER UND FARBSTOFFÜBERTRAGUNGSHEMMENDEM POLYMER
COMPOSITION DE DÉTERGENT POUR LESSIVE CONTENANT UN COPOLYMÈRE GREFFÉ ET UN POLYMÈRE INHIBITEUR DE TRANSFERT DE COLORANT

(30) Priority: 11.07.2022 WO PCT/CN2022/104845
(43) Date of publication of application: 17.01.2024
(73) Proprietor: The Procter & Gamble Company, Cincinnati, OH 45202 (US)
(72) Inventor: TANG, Ming, Beijing, 101312 (CN); FOSSUM, Renae Dianna, Cincinnati, 45202 (US); YAN, Muyun, Beijing, 101312 (CN)
(74) Representative: P&G Patent Belgium UK

(56) References cited:
- EP-A1- 3 694 926
- WO-A1-2020/005476
- WO-A1-2020/237258
- WO-A1-2021/067984
- WO-A1-2021/127697
- US-A- 4 904 408

## Description

### FIELD OF THE INVENTION

The present invention relates to a laundry detergent composition containing a graft copolymer and a dye transfer inhibitor (DTI) polymer.

### BACKGROUND OF THE INVENTION

As detergent products are evolving, consumer needs in the term of cleaning have been well met. However, there are still some other unmet consumer needs in the field of laundry. Particularly, one of the unmet needs is to prevent dye transfer among colored textiles during the wash cycles. When laundering fabrics, dye transfer can cause challenges. For example, dye from one portion of a fabric may become suspended in a wash liquor and may then deposit on a different portion of the fabric, or on a different fabric altogether. Transfer of such dyes (known as "fugitive dyes") can cause graying of fabrics, especially of those of a light or white color.

Certain polymers, generally known as dye transfer inhibitor ("DTI") polymers, have traditionally been used in laundry compositions to address the dye transfer problem. Such polymers include polyvinyl pyrrolidone (PVP), poly(vinylpyridine-N-oxide) (PVNO), polyvinylpyrrolidone-co-polyvinylimidazole (PVP/PVI), poly(vinylpyrrolidone)co-poly(vinylpyridine-N-oxide) (PVP/PVNO) polymers. Some various graft copolymers including polyalkylene oxide, N-vinylpyrrolidone, and vinyl ester have also been described that deliver less dye transfer. The traditional DTI polymers are effective at inhibiting the transfer of dyes. WO 2020/005476 A1 discloses a laundry composition comprising a graft copolymer as dye transfer inhibitor.

However, the dye transfer inhibition achieved by detergent compositions containing these actives are not sufficient to meet consumers' expectation. Therefore, there are still needs for providing a laundry detergent composition which is capable of more effectively inhibiting dye transfer.

### SUMMARY OF THE INVENTION

It is a surprising and unexpected discovery of the present invention that the combination of a graft copolymer and a DTI polymer in a detergent formulation can deliver a significantly improved inhibition of dye transfer than when a graft copolymer or DTI polymer are used alone.

Correspondingly, the present invention in one aspect relates to a laundry detergent composition, comprising:
1) a graft copolymer comprising:
   a) polyalkylene oxide which has a number average molecular weight of from 1000 to 20,000 Daltons and is based on ethylene oxide, propylene oxide, butylene oxide or mixtures thereof;
   b) N-vinylpyrrolidone; and
   c) vinyl ester derived from a saturated monocarboxylic acid containing from 1 to 6 carbon atoms and/or a methyl or ethyl ester of acrylic or methacrylic acid;

   wherein the weight ratio of (a):(b) is from 1:0.1 to 1:2, and
   wherein the amount, by weight, of (a) is greater than the amount of (c);
2) a dye transfer inhibitor (DTI) polymer which is selected from the group consisting of: polyvinylimidazoles (PVI) polymers, copolymers of N-vinylpyrrolidone and N-vinylimidazole (PVP/PVI), polyvinyloxazolidones polymers, and any mixtures thereof.

In one embodiment according to the present application, in the graft polymer, a) the polyalkylene oxide comprises and preferably consists of ethylene oxide units, and c) the vinyl ester comprises and preferably consists of vinyl acetate.

In another embodiment according to the present application, in the graft polymer, a) the polyalkylene oxide comprises and preferably consists of ethylene oxide units and propylene oxide units, and c) the vinyl ester comprises and preferably consists of vinyl acetate.

In one embodiment according to the present application, the polyalkylene oxide has a number average molecular weight of from 1000 to 20,000 Daltons.

In one embodiment according to the present application, in the graft polymer, the weight ratio of (a):(c) is from 1.0:0.1 to 1.0:0.99, preferably from 1.0:0.3 to 1.0:0.9.

In one embodiment according to the present application, in the graft polymer, from 1.0 mol% to 60 mol%, preferably from 20 mol% to 60 mol%, more preferably from 30 mol% to 50mol% of the grafted-on monomers of component (c) are hydrolyzed.

In one embodiment according to the present application, the graft polymer has a weight average molecular weight of from 4,000 Da to 100,000 Da, preferably from 5,000 Da to 100,000 Da, more preferably from 5,000 Da to 50,000 Da, most preferably from 8,000 Da to 20,000 Da.

In one embodiment according to the present application, the composition comprises:
from about 0.01% to about 15%, preferably from about 0.05% to about 10%, more preferably from about 0.1% to about 5%, and most preferably from about 0.2% to about 3%, by weight of the composition, of the graft copolymer, and/or
from about 0.001% to about 1%, preferably from about 0.005% to about 0.5%, more preferably from about 0.008% to about 0.2%, and most preferably from about 0.01% to about 0.1%, by weight of the composition, of the DTI polymer.

In one embodiment according to the present application, the weight ratio of the graft copolymer to the DTI polymer is from about 100:1 to about 1:1, preferably from about 70:1 to about 3:1, more preferably from about 50:1 to about 7:1, and most preferably from about 30:1 to about 10:1.

In one embodiment according to the present application, the composition further comprises a treatment adjunct which is preferably selected from the group consisting of a surfactant system, fatty acids and/or salts thereof, enzymes, encapsulated benefit agents, soil release polymers, hueing agents, builders, chelating agents, dye transfer inhibiting agents, dispersants, enzyme stabilizers, anti-oxidants, catalytic materials, bleaching agents, bleach catalysts, bleach activators, polymeric dispersing agents, soil removal/anti-redeposition agents, polymeric grease cleaning agents, amphiphilic copolymers, brighteners, suds suppressors, dyes, hueing agents, perfume, structure elasticizing agents, fabric softeners, carriers, fillers, hydrotropes, solvents, anti-microbial agents and/or preservatives, neutralizers and/or pH adjusting agents, processing aids, rheology modifiers and/or structurants, opacifiers, pearlescent agents, pigments, anti-corrosion and/or anti-tarnishing agents, and mixtures thereof.

In one embodiment according to the present application, said composition is in the form of a liquid composition, a granular composition, a single-compartment pouch, a multi-compartment pouch, a sheet, a pastille or bead, a fibrous article, a tablet, a bar, flake, or a mixture thereof.

In another aspect, the present application is related to a method for protecting color of a colored fabric comprising contacting the colored fabric with the laundry detergent composition according to the present application.

In another aspect, the present application is related to the use of the laundry detergent composition according to the present application for improving the color protection, preferably reducing dye fading and/or dye transfer to co-washed fabrics during laundering.

In one embodiment according to the present application, the protection of the color is achieved by preventing dye transfer.

It is an advantage of the laundry detergent composition to deliver an effective dye transfer inhibition for colored fabrics.

### DETAILED DESCRIPTION OF THE INVENTION

### Definitions

As used herein, the articles including "a" and "an" when used in a claim, are understood to mean one or more of what is claimed or described.

As used herein, the terms "comprise", "comprises", "comprising", "include", "includes", "including", "contain", "contains", and "containing" are meant to be non-limiting, i.e., other steps and other ingredients which do not affect the end of result can be added. The above terms encompass the terms "consisting of" and "consisting essentially of".

As used herein, when a composition is "substantially free" of a specific ingredient, it is meant that the composition comprises less than a trace amount, altematively less than 0.1%, alternatively less than 0.01%, alternatively less than 0.001%, by weight of the composition, of the specific ingredient.

As used herein, the term "laundry detergent composition" means a composition for cleaning soiled materials, including fabrics. Such compositions may be used as a pre-laundering treatment, a post-laundering treatment, or may be added during the rinse or wash cycle of the laundering operation. The laundry detergent composition compositions may have a form selected from liquid, powder, unit dose such as single-compartment or multi-compartment unit dose, pouch, tablet, gel, paste, bar, or flake. Preferably, the laundry detergent composition is a liquid or a unit dose composition. The term of "liquid laundry detergent composition" herein refers to compositions that are in a form selected from the group consisting of pourable liquid, gel, cream, and combinations thereof. The liquid laundry detergent composition may be either aqueous or nonaqueous, and may be anisotropic, isotropic, or combinations thereof. The term of "unit dose laundry detergent composition" herein refers to a water-soluble pouch containing a certain volume of liquid wrapped with a water-soluble film.

As used herein, the term "alkyl" means a hydrocarbyl moiety which is branched or unbranched, substituted or unsubstituted. Included in the term "alkyl" is the alkyl portion of acyl groups.

As used herein, the term "washing solution" refers to the typical amount of aqueous solution used for one cycle of laundry washing, preferably from 1 L to 50 L, alternatively from 1 L to 20 L for hand washing and from 20 L to 65 L for machine washing.

As used herein, the term "soiled fabric" is used non-specifically and may refer to any type of natural or artificial fibers, including natural, artificial, and synthetic fibers, such as, but not limited to, cotton, linen, wool, polyester, nylon, silk, acrylic, and the like, as well as various blends and combinations.

### Composition

The compositions of the present disclosure may be selected from the group of light duty liquid detergents compositions, heavy duty liquid detergent compositions, detergent gels commonly used for laundry, bleaching compositions, laundry additives, fabric enhancer compositions, and mixtures thereof.

The composition may be in any suitable form. The composition may be in the form of a liquid composition, a granular composition, a single-compartment pouch, a multi-compartment pouch, a sheet, a pastille or bead, a fibrous article, a tablet, a bar, flake, or a mixture thereof. The composition can be selected from a liquid, solid, or combination thereof.

The composition can be an aqueous liquid laundry detergent composition. For such aqueous liquid laundry detergent compositions, the water content can be present at a level of from 5.0 % to 95 %, preferably from 25 % to 90 %, more preferably from 50 % to 85 % by weight of the liquid detergent composition.

The pH range of the detergent composition may be preferably from 6.0 to 8.9, more preferably from pH 7 to 8.8.

The detergent composition can also be encapsulated in a water-soluble film, to form a unit dose article. Such unit dose articles comprise a detergent composition of the present invention, wherein the detergent composition comprises less than 20%, preferably less than 15%, more preferably less than 10% by weight of water, and the detergent composition is enclosed in a water-soluble or dispersible film. Such unit-dose articles can be formed using any means known in the art. Suitable unit-dose articles can comprise one compartment, wherein the compartment comprises the liquid laundry detergent composition. Alternatively, the unit-dose articles can be multi-compartment unit-dose articles, wherein at least one compartment comprises the liquid laundry detergent composition.

### Graft copolymers

The detergent composition may comprise one or more graft copolymers. The graft copolymer can be present at a level of from about 0.01% to about 15%, preferably from about 0.05% to about 10%, more preferably from about 0.1% to about 5%, and most preferably from about 0.2% to about 3%, e.g. 0.10%, 0.15%, 0.20%, 0.25%, 0.30%, 0.35%, 0.40%, 0.45%, 0.50%, 1%, 2%, or 3%, by weight of the composition.

The graft copolymer comprises: (a) polyalkylene oxide which has a number average molecular weight of from 1000 to 20,000 Daltons and is based on ethylene oxide, propylene oxide, or butylene oxide, (b) N-vinylpyrrolidone, and (c) vinyl ester derived from a saturated monocarboxylic acid containing from 1 to 6 carbon atoms, wherein the weight ratio of (a):(b) is from 1:0.1 to 1:2, preferably from 1:0.1 to 1:1, more preferably from 1:0.3 to 1:1, and wherein the amount, by weight, of (a) is greater than the amount of (c).

The weight ratio of (a):(c) is from 1.0:0.1 to 1.0:0.99, or from 1.0:0.3 to 1.0:0.9. The weight ratio of (b):(c) can be from 1.0:0.1 to 1.0:5.0, or to 1.0:4.0.

The amount, by weight of the polymer, of (a) is greater than the amount of (c). The polymer may comprise at least 50% by weight, preferably at least 60% by weight, more preferably at least 75% by weight of (a) polyalkylene oxide.

The graft copolymer comprises and/or is obtainable by grafting (a) a polyalkylene oxide which has a number average molecular weight of from 1000 Da to 20000 Da, or to 15000 Da, or to 12000 Da, or to 10000 Da and is based on ethylene oxide, propylene oxide, or butylene oxide, preferably based on ethylene oxide, with (b) N-vinylpyrrolidone, and further with (c) a vinyl ester derived from a saturated monocarboxylic acid containing from 1 to 6 carbon atoms, preferably a vinyl ester that is vinyl acetate or a derivative thereof.

Suitable polyalkylene oxides may be based on homopolymers or copolymers, with homopolymers being preferred. Suitable polyalkylene oxides may be based on homopolymers of ethylene oxide or ethylene oxide copolymers having an ethylene oxide content of from 40 mol% to 99 mol%. Suitable comonomers for such copolymers may include propylene oxide, n-butylene oxide, and/or isobutylene oxide. Suitable copolymers may include copolymers of ethylene oxide and propylene oxide, copolymers of ethylene oxide and butylene oxide, and/or copolymers of ethylene oxide, propylene oxide, and at least one butylene oxide. The copolymers may include an ethylene oxide content of from 40 to 99 mol%, a propylene oxide content of from 1.0 to 60 mol%, and a butylene oxide content of from 1.0 to 30 mol%. The graft base may be linear (straight-chain) or branched, for example a branched homopolymer and/or a branched copolymer.

Branched copolymers may be prepared by addition of ethylene oxide with or without propylene oxides and/or butylene oxides onto polyhydric low molecular weight alcohols, for example trimethylol propane, pentoses, or hexoses.

The alkylene oxide unit may be randomly distributed in the polymer or be present therein as blocks.

The polyalkylene oxides of component (a) may be the corresponding polyalkylene glycols in free form, that is, with OH end groups, or they may be capped at one or both end groups. Suitable end groups may be, for example, C1-C25-alkvl, phenyl, and C1-C14-alkylphenyl groups. The end group may be a C1-alkyl (e.g., methyl) group. Suitable materials for the graft base may include PEG 1000, PEG 2000, PEG 4000, PEG 6000, PEG 8000, PEG 10000, PEG 12000, and/or PEG 20000, which are polyethylene glycols, and/or MPEG 2000, MPEG 4000, MPEG 6000, MPEG 8000 and MEG 10000 which are monomethoxypolyethylene glycols that are commercially available from BASF under the tradename PLURIOL and/or block copolymers made from ethylene oxide-propylene oxide-ethylene oxide (EO-PO-EO) or from propylene oxide-ethylene oxide-propylene oxide (PO-EO-PO) such as PE 6100, PE 6800 or PE 3100 commercially available from BASF under the tradename PLURONIC.

The graft copolymers of the present disclosure may be characterized by relatively low degree of branching (i.e., degree of grafting). In the graft copolymers of the present disclosure, the average number of grafting sites may be less than or equal to 1.0, or less than or equal to 0.8, or less than or equal to 0.6, or less than or equal to 0.5, or less than or equal to 0.4, per 50 alkylene oxide groups, e.g., ethylene oxide groups. The graft copolymers may comprise, on average, based on the reaction mixture obtained, at least 0.05, or at least 0.1, graft site per 50 alkylene oxide groups, e.g., ethylene oxide groups. The degree of branching may be determined, for example, by means of ¹³C NMR spectroscopy from the integrals of the signals of the graft sites and the -CH₂-groups of the polyalkylene oxide.

The number of grafting sites may be adjusted by manipulating the temperature and/or the feed rate of the monomers. For example, the polymerization may be carried out in such a way that an excess of component (a) and the formed graft copolymer is constantly present in the reactor. For example, the quantitative molar ratio of component (a) and polymer to ungrafted monomer (and initiator, if any) is generally greater than or equal to 10:1, or to 15:1, or to 20:1.

The polyalkylene oxides are grafted with N-vinylpyrrolidone as the monomer of component (b). Without wishing to be bound by theory, it is believed that the presence of the N-vinylpyrrolidone ("VP") monomer in the graft copolymers according to the present disclosure provides water-solubility and good film-forming properties compared to otherwise-similar polymers that do not contain the N-vinylpyrrolidone monomer. The vinyl pyrrolidone repeat unit has amphiphilic character with a polar amide group that can form a dipole, and a non-polar portion with the methylene groups in the backbone and the ring, making it hydrophobic.

The polyalkylene oxides are grafted with a vinyl ester as the monomer of component (c). The vinyl ester may be derived from a saturated monocarboxylic acid, which may contain 1 to 6 carbon atoms, or from 1 to 3 carbon atoms, or from 1 to 2 carbon atoms, or 1 carbon atom. Suitable vinyl esters may be selected from the group consisting of vinyl formate, vinyl acetate, vinyl propionate, vinyl butyrate, vinyl valerate, vinyl iso-valerate, vinyl caproate, or mixtures thereof. Preferred monomers of component (c) include those selected from the group consisting of vinyl acetate, vinyl propionate, or mixtures thereof, preferably vinyl acetate.

Conventionally, molecular weights are expressed by their "K-values," which are derived from relative viscosity measurements. The graft copolymers may have a K value of from 5.0 to 200, optionally from 5.0 to 50, determined according to H. Fikentscher in 2% strength by weight solution in dimethylformamide at 25C.

The graft copolymers of the present disclosure may be characterized by a relatively narrow molar mass distribution. For example, the graft copolymers may be characterized by a polydispersity M_{w}/Mₙ of less than or equal to 3.0, or less than or equal to 2.5, or less than or equal to 2.3. The polydispersity of the graft copolymers may be from 1.5 to 2.2. The polydispersity may be determined by gel permeation chromatography using organic solvent such as hexafluoroisopropanol (HFIP) with multi-angle laser light scattering detection.

The mean molecular weight Mw of the preferred graft polymers may be from 3000 Da to 100,000 Da, preferably from 6000 Da to 45,000 Da, and more preferably from 8000 Da to 30,000 Da.

The graft copolymers may be prepared by grafting the suitable polyalkylene oxides of component (a) with the monomers of component (b) in the presence of free radical initiators and/or by the action of high-energy radiation, which may include the action of high-energy electrons. This may be done, for example, by dissolving the polyalkylene oxide in at least one monomer of group (b), adding a polymerization initiator and polymerizing the mixture to completion. The graft polymerization may also be carried out semicontinuously by first introducing a portion, for example 10%, of the mixture of polyalkylene oxide to be polymerized, at least one monomer of group (b) and/or (c) and initiator, heating to polymerization temperature and, after the polymerization has started, adding the remainder of the mixture to be polymerized at a rate commensurate with the rate of polymerization. The graft copolymers may also be obtained by introducing the polyalkylene oxides of group (a) into a reactor, heating to the polymerization temperature, and adding at least one monomer of group (b) and/or (c) and polymerization initiator, either all at once, a little at a time, or uninterruptedly, optionally uninterruptedly, and polymerizing.

In the preparation of the graft copolymers, the order in which the monomers (b) and (c) are grafted onto component (a) may be immaterial and/or freely chooseable. For example, first N-vinylpyrrolidone may be grafted onto component (a), and then a monomer (c) or a mixture of monomers of group (c). It is also possible to first graft the monomers of group (c) and then N-vinylpyrrolidone onto the graft base (a). It may be that a monomer mixture of (b) and (c) are grafted onto graft base (a) in one step. The graft copolymer may be prepared by providing graft base (a) and then first grafting N-vinylpyrrolidone and then vinyl acetate onto the graft base.

Any suitable polymerization initiator(s) may be used, which may include organic peroxides such as diacetyl peroxide, dibenzoyl peroxide, succinyl peroxide, di-tert-butyl peroxide, tert-butyl perbenzoate, tert-butyl perpivalate, tert-butyl permaleate, cumene hydroperoxide, diisopropyl peroxodicarbamate, bis(o-toluoyl) peroxide, didecanoyl peroxide, dioctanoyl peroxide, dilauroyl peroxide, tert-butyl perisobutyrate, tert-butyl peracetate, di-tert-amyl peroxide, tert-butyl peracetate, di-tert-amyl peroxide, tert-butyl hydroperoxide, mixtures thereof, redox initiators, and/or azo starters. The choice of initiator may be related to the choice of polymerization temperature.

The graft polymerization may take place at from 50°C to 200°C, or from 70°C to 140°C. The graft polymerization may typically be carried out under atmospheric pressure, but may also be carried out under reduced or superatmospheric pressure.

The graft polymerization may be carried out in a solvent. Suitable solvents may include: monohydric alcohols, such as ethanol, propanols, and/or butanols; polyhydric alcohols, such as ethylene glycol and/or propylene glycol; alkylene glycol ethers, such as ethylene glycol monomethyl and -ethyl ether and/or propylene glycol monomethyl and -ethyl ether; polyalkylene glycols, such as di- or tri-ethylene glycol and/or di- or tri-propylene glycol; polyalkylene glycol monoethers, such as poly(C2-C3-alkylene)glycol mono (C1-C16-alkyl)ethers having 3-20 alkylene glycol units; carboxylic esters, such as ethyl acetate and ethyl propionate; aliphatic ketones, such as acetone and/or cyclohexanone; cyclic ethers, such as tetrahydrofuran and/or dioxane; or mixtures thereof.

The graft polymerization may also be carried out in water as solvent. In such cases, the first step may be to introduce a solution which, depending on the amount of added monomers of component (b), is more or less soluble in water. To transfer water-insoluble products that can form during the polymerization into solution, it is possible, for example, to add organic solvents, for example monohydric alcohols having 1 to 3 carbon atoms, acetone, and/or dimethylformamide. In a graft polymerization process in water, it is also possible to transfer the water-insoluble graft copolymers into a finely divided dispersion by adding customary emulsifiers or protective colloids, for example polyvinyl alcohol. The emulsifiers used may be ionic or nonionic surfactants whose HLB value is from 3.0 to 13. HLB value is determined according to the method described in the paper by W.C. Griffin in J. Soc. Cosmet. Chem. 5 (1954), 249.

The amount of surfactant used in the graft polymerization process may be from 0.1 to 5.0 % by weight of the graft copolymer. If water is used as the solvent, solutions or dispersions of graft copolymers may be obtained. If solutions of graft copolymers are prepared in an organic solvent or in mixtures of an organic solvent and water, the amount of organic solvent or solvent mixture used per 100 parts by weight of the graft copolymer may be from 5 to 200, optionally from 10 to 100, parts by weight.

After the graft polymerization, the graft copolymer may optionally be subjected to a partial hydrolysis, e.g. 1.0 mol%, 10 mol%, 20 mol%, 30 mol%, 40 mol%, 50 mol%, 60 mol%, 70 mol%, or any ranges there between. For instance, the hydrolysis of graft copolymers prepared using vinyl acetate or vinyl propionate as component (c) gives graft copolymers containing vinyl alcohol units. The hydrolysis may be carried out, for example, by adding a base, such as sodium hydroxide solution or potassium hydroxide solution, or alternatively by adding acids and if necessary, heating the mixture.

### Dye Transfer Inhibitors

The detergent composition comprises one or more dye transfer inhibitors (DTI) polymers. The DTI polymer can be present at the level of from about 0.001% to about 1%, preferably from about 0.005% to about 0.5%, more preferably from about 0.008% to about 0.2%, and most preferably from about 0.01% to about 0.1%, e.g. 0.01%, 0.015%, 0.02%, 0.025%, 0.03%, 0.035%, 0.04%, 0.05%, 0.06%, 0.07%, 0.08%, 0.1% or any ranges therebetween, by weight of the composition, of the DTI polymer

According to the invention, the DTI polymer is chosen from

Copolymers of N-vinylpyrrolidone and N-vinylimidazole polymers (referred to as a class as "PVPVI") are preferred for use herein. Preferably the PVPVI has an average molecular weight range from 5,000 Da to 1,000,000 Da, more preferably from 5,000 Da to 200,000 Da, and most preferably from 10,000 Da to 20,000 Da (The average molecular weight range is determined by light scattering as described in Barth, et al., Chemical Analysis, Vol 113. "Modem Methods of Polymer Characterization"). The PVPVI copolymers typically have a molar ratio of N-vinylimidazole to N-vinylpyrrolidone from 1:1 to 0.2:1, more preferably from 0.8:1 to 0.3:1, most preferably from 0.6:1 to 0.4:1.

These copolymers can be either linear or branched.

### Surfactant system

Preferably, the composition comprises from 1% to 99%, preferably from 4% to 80%, preferably from 6% to 50%, more preferably from 10% to 30%, e.g., 5%, 10%, 15%, 20%, 25%, 30%, 35%, 40%, 45%, 50%, 60%, 70%, 80%, 90% or any ranges therebetween, by weight of the composition, of a surfactant system. Particularly, the surfactant system may comprise an anionic surfactant and a nonionic surfactant.

The anionic surfactant suitable for the composition in the present invention may be selected from the group consisting of C₆-C₂₀ linear alkylbenzene sulfonates (LAS), C₆-C₂₀ alkyl sulfates (AS), C₆-C₂₀ alkyl alkoxy sulfates (AAS), C₆-C₂₀ methyl ester sulfonates (MES), C₆-C₂₀ alkyl ether carboxylates (AEC), and any combinations thereof. For example, the laundry detergent composition may contain a C₆-C₂₀ alkyl alkoxy sulfates (AAₓS), wherein x is about 1-30, preferably about 1-15, more preferably about 1-10, most preferably x is about 1-3. The alkyl chain in such AAₓS can be either linear or branched, with mid-chain branched AAₓS surfactants being particularly preferred. A preferred group of AAₓS include C₁₂-C₁₄ alkyl alkoxy sulfates with x of about 1-3. In some embodiments, the composition comprises from 1% to 30%, preferably from 2% to 25%, more preferably from 3% to 20%, for example, 4%, 5%, 6%, 7%, 8%, 9%, 10%, 12%, 14%, 16%, 18%, 20%, or any ranges therebetween, by weight of the composition of the anionic surfactant.

The nonionic surfactant suitable for the composition in the present invention may be selected from the group consisting of alkyl alkoxylated alcohols, alkyl alkoxylated phenols, alkyl polysaccharides, polyhydroxy fatty acid amides, alkoxylated fatty acid esters, sucrose esters, sorbitan esters and alkoxylated derivatives of sorbitan esters, and any combinations thereof. Non-limiting examples of nonionic surfactants suitable for use herein include: C₁₂-C₁₈ alkyl ethoxylates, such as Neodol^{®} nonionic surfactants available from Shell; C₆-C₁₂ alkyl phenol alkoxylates wherein the alkoxylate units are a mixture of ethyleneoxy and propyleneoxy units; C₁₂-C₁₈ alcohol and C₆-C₁₂ alkyl phenol condensates with ethylene oxide/propylene oxide block alkyl polyamine ethoxylates such as Pluronic^{®} available from BASF; C₁₄-C₂₂ mid-chain branched alkyl alkoxylates, BAEx, wherein x is from about 1 to about 30; alkylpolysaccharides, specifically alkylpolyglycosides; polyhydroxy fatty acid amides; and ether capped poly(oxyalkylated) alcohol surfactants. Also useful herein as nonionic surfactants are alkoxylated ester surfactants such as those having the formula R¹C(O)O(R₂O)nR³ wherein R¹ is selected from linear and branched C₆-C₂₂ alkyl or alkylene moieties; R² is selected from C₂H₄ and C₃H₆ moieties and R³ is selected from H, CH₃, C₂H₅ and C₃H₇ moieties; and n has a value between about 1 and about 20. Such alkoxylated ester surfactants include the fatty methyl ester ethoxylates (MEE) and are well-known in the art. In some particular embodiments, the alkoxylated nonionic surfactant contained by the laundry detergent composition of the present invention is a C₆-C₂₀ alkoxylated alcohol, preferably C₈-C₁₈ alkoxylated alcohol, more preferably C₁₀-C₁₆ alkoxylated alcohol. The C₆-C₂₀ alkoxylated alcohol is preferably an alkyl alkoxylated alcohol with an average degree of alkoxylation of from about 1 to about 50, preferably from about 3 to about 30, more preferably from about 5 to about 20, even more preferably from about 5 to about 9. In some embodiments, the composition comprises from 1% to 30%, preferably from 2% to 25%, more preferably from 3% to 20%, for example, 4%, 5%, 6%, 7%, 8%, 9%, 10%, 12%, 14%, 16%, 18%, 20%, or any ranges therebetween, by weight of the composition of the nonionic surfactant.

The ratio of anionic surfactant to nonionic surfactant may be between 0.01 and 100, preferably between 0.05 and 20, more preferably between 0.1 and 10, and most preferably between 0.2 and 5.

In some embodiments, the anionic surfactant comprises a C₆-C₂₀ linear alkylbenzene sulfonate surfactant (LAS), preferably C₁₀-C₁₆ LAS, and more preferably C₁₂-C₁₄ LAS. In other embodiments, the anionic surfactant comprises a C₆-C₂₀ alkyl alkoxy sulfates (AAS), preferably C₁₀-C₁₆ AAS, and more preferably C₁₂-C₁₄ AAS. In other embodiments, the anionic surfactant comprises a C₆-C₂₀ alkyl sulfates (AS), preferably C₁₀-C₁₆ AS, and more preferably C₁₂-C₁₄ AS.

In some particular embodiments of the present invention, the anionic surfactant may be present as the main surfactant, preferably as the majority surfactant, in the composition. Preferably, the ratio of anionic surfactant to nonionic surfactant may be between 1.05 and 100, preferably between 1.1 and 20, more preferably between 1.2 and 10, and most preferably between 1.3 and 5. Particularly, the anionic surfactant may comprise C₆-C₂₀ linear alkylbenzene sulfonates (LAS).

In some particular embodiments of the present invention, the nonionic surfactant may be present as the main surfactant, preferably as the majority surfactant, in the composition. Preferably, the ratio of anionic surfactant to nonionic surfactant may be between 0.01 and 0.95, preferably between 0.05 and 0.9, more preferably between 0.1 and 0.85, and most preferably between 0.2 and 0.8. Particularly, the nonionic surfactant may comprise C₆-C₂₀ alkoxylated alcohol.

The laundry detergent composition of the present invention may further comprise a cationic surfactant. Non-limiting examples of cationic surfactants include: quaternary ammonium surfactants, which can have up to 26 carbon atoms include: alkoxylate quaternary ammonium (AQA) surfactants; dimethyl hydroxyethyl quaternary ammonium compounds; dimethyl diisopropyl quaternary ammonium compounds; dimethyl hydroxyethyl lauryl ammonium chloride; polyamine cationic surfactants; and amino surfactants, specifically amido propyldimethyl amine (APA).

The laundry detergent composition of the present invention may further comprise an amphoteric surfactant. Non-limiting examples of amphoteric surfactants include: amine oxides, derivatives of secondary and tertiary amines, derivatives of heterocyclic secondary and tertiary amines, or derivatives of quaternary ammonium, quaternary phosphonium or tertiary sulfonium compounds. Preferred examples include: C₆-C₂₀ alkyldimethyl amine oxides, betaine, including alkyl dimethyl betaine and cocodimethyl amidopropyl betaine, sulfo and hydroxy betaines, such as N-alkyl-N,N-dimethylammino-1-propane sulfonate where the alkyl group can be C₈-C₁₈ or C₁₀-C₁₄.

### Other ingredients

The laundry detergent composition according to the present disclosure may further comprise from 0.01% to 10%, preferably from 0.1% to 5%, more preferably from 0.2% to 3%, most preferably from 0.3% to 2%, by weight of the composition, of a surfactant boosting polymer, preferably polyvinyl acetate grafted polyethylene oxide copolymer.

The laundry detergent composition herein may comprise adjunct ingredients. Suitable adjunct materials include but are not limited to: builders, chelating agents, rheology modifiers, dye transfer inhibiting agents, dispersants, enzymes, and enzyme stabilizers, anti-oxidants, catalytic materials, bleach activators, hydrogen peroxide, sources of hydrogen peroxide, preformed peracids, polymeric dispersing agents, clay soil removal/anti-redeposition agents, brighteners, suds suppressors, dyes, photobleaches, perfumes, perfume microcapsules, structure elasticizing agents, fabric softeners, carriers, hydrotropes, processing aids, solvents, hueing agents, structurants and/or pigments. The precise nature of these adjunct ingredients and the levels thereof in the laundry detergent composition will depend on the physical form of the composition and the nature of the cleaning operation for which it is to be used.

In some embodiments, the laundry detergent composition according to the present disclosure may further comprise from 0.01% to 10%, preferably from 0.1% to 5%, more preferably from 0.2% to 4%, most preferably from 0.3% to 3%, for example, 0.5%, 1%, 2%, 3%, 4%, 5% or any ranges thereof, by weight of the composition, of a fatty acid.

### Composition Preparation

The laundry detergent composition of the present invention is generally prepared by conventional methods such as those known in the art of making laundry detergent compositions. Such methods typically involve mixing the essential and optional ingredients in any desired order to a relatively uniform state, with or without heating, cooling, application of vacuum, and the like, thereby providing laundry detergent compositions containing ingredients in the requisite concentrations.

### Method of Use

Another aspect of the present invention is directed to a method of using the laundry detergent composition to treat a fabric. Such method can deliver a color protection benefit. The method comprises the step of administering from 5 g to 120 g of the above-mentioned laundry detergent composition into a laundry washing basin comprising water to form a washing solution. The washing solution in a laundry washing basin herein preferably has a volume from 1 L to 65 L, alternatively from 1 L to 20 L for hand washing and from 10 L to 65 L for machine washing. The temperatures of the laundry washing solution preferably range from 5°C to 60°C.

In some embodiments, the composition is added to a washing machine via a dispenser (e.g. a dosing drawer). In some other embodiments, the composition is added to an automatic dosing washing machine via an automatic dosing mechanism. In some other embodiments, the composition is added to directly a drum of a washing machine. In some other embodiments, the composition is added directly to the wash liquor.

The dosing amount in the method herein may be different depending on the washing type. In one embodiment, the method comprises administering from about 5 g to about 60 g of the laundry detergent composition into a hand washing basin (e.g., about 2-4 L). In an alternative embodiment, the method comprises administering from about 5 g to about 100 g, preferably from about 10 g to about 65 g of the laundry detergent composition into a washing machine (e.g., about 10-45 L).

### Test Method

### Test 1: Dye transfer test

Dye transfer test is conducted by using Tergotometer (Model: RHLQ1V, from Research Institute of Daily Chemical Industry (RIDCI)) as below:

| | |
|---|---|
| Dye Source: | Direct red dye FR-33 (Sundat Dye Stuffs, Xinhui, Guangzhou, China) |
| Dye level: | 2.5 ppm (as in washing solution) |
| HDL Dosage: | 2g |
| Water volume: | 1000ml |
| Water type: | RO water |
| HDL Concentration: | 2000ppm |
| Hardness: | 15 gpg GC NS Hardness (Ca/Mg=3/2) |
| Temperature: | 40°C |
| White Fabric Tracer: | 10cm x 10cm nil-brightener CW98 (100% Heavy Cotton, purchased from Danxin Textile Co. Beijing, China), 6 pieces, which were pre-stripped with China National Standard powder detergent (from Taiyuan, China) in DI water by 6 times |

Measure the L*ab of the white tracers before washing according to the Dye transfer method below.
1, Add ~990ml RO water and corresponding hardness. (Note: after adding HDL and dye solution, total volume should be 1000mL.)
2, Wait for the temperature to heat up to 40 °C.
3, Add HDL and dissolve for 3 minutes.
4, Put in white tracers and stir for 3 minutes.
5, Start stirring (main wash) and add the dye solution.
6, The main wash time is 2 minutes.
7, After main wash is completed, pour all the cloth pieces into a basin filled with city water for rinsing.
8, Use tweezer pinch one of the fabric's corner, make sure both the fabric and tweezer are under the water surface, Rinse 10 times (forward + back = 1 rinse) with fast wrist motion.
9, Switch the hold to another corner of the fabric, and rinse 10 times.
10, Remove the fabrics from the rinse container and squeeze dry.
11, Measure the L*ab of the tracer washed with detergent and the dye solution by using IA measurement, and calculate the ΔE.

### EXAMPLES

### Synthesis Example 1: Synthesis of Graft Copolymer

A graft polymer which is PVP/ PVAc-g-PEG at a weight ratio of 20:30:50 ratio with a weight average molecular weight 16,800 Dalton was prepared as follows.

A polymerization vessel equipped with stirrer and reflux condenser was initially charged with 720g of PEG (6000 g/mol) and 60g 1,2-propane diol (MPG) under nitrogen atmosphere. The mixture was homogenized at 70°C.

Then, 432 g of vinyl acetate (in 2 h), 288 g of vinylpyrrolidone in 576 g of MPG (in 5 h), and 30.2 g of tert.-butyl perpivalate in 196.6 g MPG (in 5.5 h) were metered in. Upon complete addition of the feeds, the solution was stirred at 70°C for 1 h. Subsequently, 3.8 g tert.-butyl perpivalate in 25.0 g MPG (in 1.5 h) were metered in followed by 0.5 h of stirring.

The volatiles were removed by vacuum stripping. Then, 676.8 g deionized water were added and a steam distillation was conducted at 100°C for 1 h.

The temperature of the reaction mixture was reduced to 80°C and 160.6 g of aqueous sodium hydroxide solution (50 %, 40 mol% respective VAc) was added with maximum feed rate. Upon complete addition of the sodium hydroxide solution, the mixture was stirred for 1 h at 80°C and subsequently cooled to ambient temperature.

The resulting graft polymer is characterized by a K-value of 24. The solid content of the final solution is 45 %.

### Example 1: Synergy between Graft Copolymer and DTI polymer in Laundry Detergent Composition for Dye Transfer Inhibition

Four (4) sample liquid laundry detergent compositions were prepared containing the following ingredients. Comparative Sample 1 does not contain a graft copolymer or a DTI polymer. Comparative Sample 2 contains a graft copolymer but does not contain a DTI polymer, Comparative Sample 3 contains a DTI polymer but does not contain a graft copolymer. The Inventive Sample 1 contains both a graft copolymer and a DTI polymer.

**Table 1**

| Ingredients (weight%) | Comparative Sample 1 | Comparative Sample 2 | Comparative Sample 3 | Inventive Sample 1 |
|---|---|---|---|---|
| Graft copolymer¹ | - | 0.4% | - | 0.4% |
| DTI polymef² | - | - | 0.02% | 0.02% |
| C₁₂₋₁₄EO₇ | 10% | 10% | 10% | 10% |
| C₁₂₋₁₄AE₁₋₃S | 2.5% | 2.5% | 2.5% | 2.5% |
| C₁₁₋₁₃LAS | 2.5% | 2.5% | 2.5% | 2.5% |
| Water | Balance | Balance | Balance | Balance |
| Notes | Surfactants only w/o DTI efficacy | Graft copolymer only | DTI polymer only | Graft copolymer + DTI polymer |

| | | | | |
|---|---|---|---|---|
| 1 Graft copolymer described in Synthesis Example 1 with PVP/ PVAc-g-PEG at a weight ratio of 20:30:50 ratio with a weight average molecular weight 16,800 Dalton. 2 DTI polymer, poly(1-vinylpyrrolidone-co-1-vinylimidazole), commercially available as Sokalan^{®} HP 56K from BASF | | | | |

In accordance with Test 1: Dye transfer test as described hereinabove, the ΔE for these samples were measured. The higher ΔE indicates the worse dye transfer, while the lower ΔE indicates less dye transfer, where a more negative difference corresponds to more effective dye transfer inhibition.

The results shown in the Table 2 below, in which colored fabrics are washed with white fabric tracer, show significant dye transfer after being washed by using Comparative Sample 1 without a graft copolymer and a DTI polymer with a △E 16.8. When fabrics are washed with Comparative Sample 2 containing graft copolymer, the washed fabrics have 7.3 units less dye transfer than Comparative Sample 1. Fabrics washed with Comparative Sample 3 containing a DTI polymer has 2.6 units less dye transfer than Comparative Sample 1. Unexpectedly, Inventive Sample 1 containing both a graft copolymer and a DTI polymer shows surprisingly outstanding performance compared to Comparative Samples 2 and 3 with 14.3 units less dye transfer. This data indicates a synergy between the graft copolymer and the DTI polymer because the improvement in dye transfer inhibition is greater than the sum of Comparative Sample 2 and Comparative Sample 3 when washed separately (7.3 + 2.6 = 9.9). When the graft copolymer and DTI polymer are combined, the washed fabric has 14.3 units less dye transfer which is 4.4 units improvement compared to when the graft copolymer or DTI polymer are used alone.

**Table 2**

| | Comparative Sample 1 | Comparative Sample 2 | Comparative Sample 3 | Inventive Sample 1 |
|---|---|---|---|---|
| △E (before wash -after wash) | 16.8 | 9.5 | 14.2 | 2.5 |
| Improvement vs. Comparative Sample 1 | - | 7.3 units less dye transfer | 2.6 units less dye transfer | 14.3 units less dye transfer |
| Notes | Surfactants only w/o DTI efficacy | Graft copolymer only | DTI polymer only | Graft copolymer + DTI polymer |

### Example 2: Dye Transfer Inhibitory Effect of Laundry Detergent Composition Containing Graft Copolymer and DTI polymer at Different Ratios

Five (5) sample liquid laundry detergent compositions were prepared containing the following ingredients. Inventive Samples 2 to 5 contain both a graft copolymer and a DTI polymer at different ratios. Comparative Sample 4 contains a graft copolymer only.

**Table 3**

| Ingredients (weight%) | Comparative Sample 4 | Inventive Sample 2 | Inventive Sample 3 | Inventive Sample 4 | Inventive Sample 5 |
|---|---|---|---|---|---|
| Graft copolymer¹ | 0.4% | 0.4% | 0.4% | 0.25% | 0.25% |
| DTI polymer² | - | 0.02% | 0.04% | 0.01% | 0.03% |
| C₁₂₋₁₄EO₇ | 5.3% | 5.3% | 5.3% | 5.3% | 5.3% |
| C₁₂₋₁₄AE₁₋₃S | 4.1% | 4.1% | 4.1% | 4.1% | 4.1% |
| C₁₁₋₁₃LAS | 4.1% | 4.1% | 4.1% | 4.1% | 4.1% |
| C₁₂-C₁₈ Fatty Acid | 1.07% | 1.07% | 1.07% | 1.07% | 1.07% |
| Water | Balance | Balance | Balance | Balance | Balance |
| Ratio of Graft Copolymer to DTI | - | 20:1 | 10:1 | 25:1 | 8.3:1 |

| | | | | | |
|---|---|---|---|---|---|
| 1 Graft copolymer described in Synthesis Example 1 with PVP/ PVAc-g-PEG at a weight ratio of 20:30:50 ratio with a weight average molecular weight 16,800 Dalton. 2 DTI polymer, poly(1-vinylpyrrolidone-co-1-vinylimidazole), commercially available as Sokalan^{®} HP 56K from BASF | | | | | |

In accordance with Test 1: Dye transfer test as described hereinabove but using different dye source (i.e., to replace Direct Red FR-33 with Direct Red 227 or Direct Blue 200), the △E for these samples were measured. All inventive samples show more strong dye transfer inhibitory effect at different ratios compared to the comparative sample, as shown in the Table 4 below.

**Table 4**

| | Comparative Sample 4 | Inventive Sample 2 | Inventive Sample 3 | Inventive Sample 4 | Inventive Sample 5 |
|---|---|---|---|---|---|
| △E for Direct Red 227 | 4.3 | 2.8 | 1.5 | 4.9 | 3.7 |
| △E for Direct Blue 200 | 9.0 | 2.9 | 1.2 | 5.0 | 1.3 |
| Ratio of Graft Copolymer to DTI | - | 20:1 | 10:1 | 25:1 | 8.3:1 |

### Example 3: Exemplary Formulations of Laundry Detergent Compositions Containing Graft Copolymer and DTI Polymer

The following liquid laundry detergent compositions as shown in Tables 5 and 6 are made comprising the listed ingredients in the listed proportions (weight %).

**Table 5**

| **Ingredients (weight%)** | **A** | **B** | **C** | **D** | **E** | **F** |
|---|---|---|---|---|---|---|
| C₁₂₋₁₄AE₁₋₃S | 4 | 1.5 | 3 | 1 | 4 | 1.5 |
| C₁₁₋₁₃LAS | 2 | 3 | 5 | 1 | 2 | 3 |
| C₁₄₋₁₅EO₇ | 10 | 8.5 | 15 | 12 | 5 | -- |
| C₁₂₋₁₄EO₇ | -- | -- | -- | -- | -- | 8 |
| Graft Copolymer¹ | 0.5 | 0.9 | 0.7 | 0.3 | 0.5 | 0.9 |
| DTI polymer² | 1 | 2 | 5 | 0.5 | 0.7 | 3 |
| Citric acid | 2.4 | 0.5 | 4.8 | 0.6 | -- | 2 |
| C₁₂-C₁₈ fatty acid | 3.2 | 1.2 | 2.2 | 2 | 1.5 | 1.2 |
| Na-DTPA | 1 | 0.05 | 0.5 | 0.18 | 0.06 | 0.2 |
| Sodium cumene sulphonate | -- | -- | -- | 4.42 | -- | -- |
| Ethanol | -- | -- | -- | 1.74 | -- | -- |
| Silicone emulsion | -- | 0.0025 | 0.0025 | 0.0025 | -- | 0.0025 |
| Sodium polyacrylate | 1.4 | -- | -- | -- | 1.4 | -- |
| Polyethyleneimines | -- | -- | 1.0 | -- | -- | -- |
| NaOH | Up to pH 8 | Up to pH 8 | Up to pH 8 | Up to pH 8 | Up to pH 8 | Up to pH 8 |
| Na Formate | -- | -- | -- | 0.02 | -- | -- |
| Protease | -- | -- | 0.45 | 0.29 | -- | -- |
| Amylase | -- | -- | 0.08 | -- | -- | -- |
| Dye | -- | 0.002 | 0.002 | 0.001 | -- | 0.002 |
| Perfume oil | -- | 0.6 | 0.6 | 0.57 | -- | 0.6 |
| Water | Balance | Balance | Balance | Balance | Balance | Balance |

| | | | | | | |
|---|---|---|---|---|---|---|
| 1 Graft copolymer described in Synthesis Example 1 with PVP/ PVAc-g-PEG at 20:30:50 ratio with MW 16,800 Dalton. 2 DTI polymer, poly(1-vinylpyrrolidone-co-1-vinylimidazole), commercially available as Sokalan^{®} HP 56K from BASF | | | | | | |

**Table 6**

| **Ingredients (weight%)** | **G** | **H** | **I** | **J** | **K** | **L** |
|---|---|---|---|---|---|---|
| C₁₂₋₁₄AE₁₋₃S | 9 | 10 | 12 | 3 | 4 | 1.5 |
| C₁₁₋₁₃LAS | 2 | 3 | 5 | 12 | 9 | 15 |
| C₁₄-₁₅EO₇ | 5 | -- | -- | 3 | -- | -- |
| C₁₂₋₁₄EO₇ | -- | 3 | 4 | -- | 3 | 8 |
| Graft Copolymer¹ | 0.5 | 0.9 | 0.7 | 0.3 | 0.5 | 0.9 |
| DTI polymer² | 1 | 2 | 5 | 0.5 | 0.7 | 3 |
| Citric acid | 2.4 | 0.5 | 4.8 | 0.6 | -- | 2 |
| C₁₂-C₁₈ fatty acid | 3.2 | 1.2 | 2.2 | 2 | 1.5 | 1.2 |
| Na-DTPA | 1 | 0.05 | 0.5 | 0.18 | 0.06 | 0.2 |
| Sodium cumene sulphonate | -- | -- | -- | 4.42 | -- | -- |
| Ethanol | -- | -- | -- | 1.74 | -- | -- |
| Silicone emulsion | -- | 0.0025 | 0.0025 | 0.0025 | -- | 0.0025 |
| Sodium polyacrylate | 1.4 | -- | -- | -- | 1.4 | -- |
| Polyethyleneimines | -- | -- | 1.0 | -- | -- | -- |
| NaOH | Up to pH 8 | Up to pH 8 | Up to pH 8 | Up to pH 8 | Up to pH 8 | Up to pH 8 |
| Na Formate | -- | -- | -- | 0.02 | -- | -- |
| Protease | -- | -- | 0.45 | 0.29 | -- | -- |
| Amylase | -- | -- | 0.08 | -- | -- | -- |
| Dye | -- | 0.002 | 0.002 | 0.001 | -- | 0.002 |
| Perfume oil | -- | 0.6 | 0.6 | 0.57 | -- | 0.6 |
| Water | Balance | Balance | Balance | Balance | Balance | Balance |

| | | | | | | |
|---|---|---|---|---|---|---|
| 1 Graft copolymer described in Synthesis Example 1 with PVP/ PVAc-g-PEG at a weight ratio of 20:30:50 ratio with MW 16,800 Dalton. 2 DTI polymer, poly(1-vinylpyrrolidone-co-1-vinylimidazole), commercially available as Sokalan^{®} HP 56K from BASF | | | | | | |

### Example 4: Exemplary Formulations of Unite Dose Laundry Detergent Compositions Containing Graft Copolymer and DTI Polymer

The exemplary formulations as shown in Table 7 are made for unit dose laundry detergent. These compositions are encapsulated into compartment(s) of the unit dose by using a polyvinylalcohol-based film.

**Table 7**

| **Ingredients (weight%)** | **M** | **N** | **O** | **P** | **Q** | **R** | **S** |
|---|---|---|---|---|---|---|---|
| C u-C ₁₃ LAS | 8 | 6 | 5 | 1 | 8 | 6 | 5 |
| C₁₂-C₁₄AE₃S | 6 | 10 | 5 | 2 | 6 | 10 | 5 |
| C₁₄-C₁₅EO₇ | -- | 6 | -- | -- | 9 | 10 | 11 |
| C₁₂-C₁₄EO7 | 18 | 25 | 16 | 18 | 9 | 15 | 5 |
| Graft Copolymer¹ | 2 | 0.1 | 0.5 | 0.7 | 1.0 | 0.4 | 1.5 |
| DTI polymer² | 0.1 | 0.05 | 0.02 | 0.1 | 0.5 | 0.01 | 0.2 |
| Citric acid | 0.5 | 0.7 | 1.1 | 0.5 | 0.5 | 0.7 | 1.1 |
| C₁₂-C₁₈ fatty acid | 0.5 | 2.4 | 0.5 | 4.8 | 0.5 | 2.4 | 0.5 |
| Sodium cumene sulphonate | 1.3 | -- | 1.3 | 1.3 | 1.3 | 1.3 | 1.3 |
| Perfume oil | 0.3 | 1.5 | 2.5 | 3.0 | 4.0 | 0.8 | 1.0 |
| Solvent | Balance | Balance | Balance | Balance | Balance | Balance | Balance |

| | | | | | | | |
|---|---|---|---|---|---|---|---|
| 1 Graft copolymer described in Synthesis Example 1 with PVP/ PVAc-g-PEG at 20:30:50 ratio with MW 16,800 Dalton. 2 DTI polymer, poly(1-vinylpyrrolidone-co-1-vinylimidazole), commercially available as Sokalan^{®} HP 56K from BASF | | | | | | | |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention.

## Claims

1. A laundry detergent composition, comprising:
1) a graft copolymer comprising:
a) polyalkylene oxide which has a number average molecular weight of from 1000 to 20,000 Daltons and is based on ethylene oxide, propylene oxide, butylene oxide or mixtures thereof;
b) N-vinylpyrrolidone; and
c) vinyl ester derived from a saturated monocarboxylic acid containing from 1 to 6 carbon atoms and/or a methyl or ethyl ester of acrylic or methacrylic acid;
wherein the weight ratio of (a):(b) is from 1:0.1 to 1:2, and
wherein the amount, by weight, of (a) is greater than the amount of (c);
2) a dye transfer inhibitor (DTI) polymer which is selected from the group consisting of: polyvinylimidazoles (PVI) polymers, copolymers of N-vinylpyrrolidone and N-vinylimidazole (PVP/PVI), and any mixtures thereof.

2. The laundry detergent composition according to Claim 1, wherein in the graft polymer
a) the polyalkylene oxide comprises and preferably consists of ethylene oxide units, and
c) the vinyl ester comprises and preferably consists of vinyl acetate.

3. The laundry detergent composition according to Claim 1, wherein in the graft polymer
a) the polyalkylene oxide comprises and preferably consists of ethylene oxide units and propylene oxide units, and
c) the vinyl ester comprises and preferably consists of vinyl acetate.

4. The laundry detergent composition according to any preceding claim, wherein the polyalkylene oxide has a number average molecular weight of from 2000 to 15,000 Daltons.

5. The laundry detergent composition according to any preceding claim, wherein in the graft polymer, the weight ratio of (a):(c) is from 1.0:0.1 to 1.0:0.99, preferably from 1.0:0.3 to 1.0:0.9.

6. The laundry detergent composition according to any one of the preceding claims, wherein the graft polymer has a weight average molecular weight of from 4,000 Da to 100,000 Da, preferably 5,000 Da to 100,000 Da, more preferably from 5,000 Da to 50,000 Da, most preferably from 8,000 Da to 20,000 Da.

7. The laundry detergent composition according to any one of the preceding claims, wherein the composition comprises:
from about 0.01% to about 15%, preferably from about 0.05% to about 10%, more preferably from about 0.1% to about 5%, and most preferably from about 0.2% to about 3%, by weight of the composition, of the graft copolymer, and/or
from about 0.001% to about 1%, preferably from about 0.005% to about 0.5%, more preferably from about 0.008% to about 0.2%, and most preferably from about 0.01% to about 0.1%, by weight of the composition, of the DTI polymer.

8. The laundry detergent composition according to any one of the preceding claims, wherein the weight ratio of the graft copolymer to the DTI polymer is from about 100:1 to about 1:1, preferably from about 70:1 to about 3:1, more preferably from about 50:1 to about 7:1, and most preferably from about 30:1 to about 10:1.

9. The laundry detergent composition according to any of preceding claims, wherein the composition further comprises a treatment adjunct which is preferably selected from the group consisting of a surfactant system, fatty acids and/or salts thereof, enzymes, encapsulated benefit agents, soil release polymers, hueing agents, builders, chelating agents, dye transfer inhibiting agents, dispersants, enzyme stabilizers, anti-oxidants, catalytic materials, bleaching agents, bleach catalysts, bleach activators, polymeric dispersing agents, soil removal/anti-redeposition agents, polymeric grease cleaning agents, amphiphilic copolymers, brighteners, suds suppressors, dyes, hueing agents, perfume, structure elasticizing agents, fabric softeners, carriers, fillers, hydrotropes, solvents, anti-microbial agents and/or preservatives, neutralizers and/or pH adjusting agents, processing aids, rheology modifiers and/or structurants, opacifiers, pearlescent agents, pigments, anti-corrosion and/or anti-tarnishing agents, and mixtures thereof.

10. The laundry detergent composition according to any of preceding claims, wherein said composition is in the form of a liquid composition, a granular composition, a single-compartment pouch, a multi-compartment pouch, a sheet, a pastille or bead, a fibrous article, a tablet, a bar, flake, or a mixture thereof.

11. The use of a laundry detergent composition for improving the color protection, preferably reducing dye fading and/or dye transfer to co-washed fabrics during laundering, wherein the laundry detergent composition comprises:
1) a graft copolymer comprising:
a) polyalkylene oxide which has a number average molecular weight of from 1000 to 20,000 Daltons and is based on ethylene oxide, propylene oxide, butylene oxide or mixtures thereof;
b) N-vinylpyrrolidone; and
c) vinyl ester derived from a saturated monocarboxylic acid containing from 1 to 6 carbon atoms and/or a methyl or ethyl ester of acrylic or methacrylic acid;
wherein the weight ratio of (a):(b) is from 1:0.1 to 1:2, and
wherein the amount, by weight, of (a) is greater than the amount of (c);
2) a dye transfer inhibitor (DTI) polymer which is selected from the group consisting of: polyvinylimidazoles (PVI) polymers, copolymers of N-vinylpyrrolidone and N-vinylimidazole (PVP/PVI) and any mixtures thereof.

## Patentansprüche

1. Wäschewaschmittelzusammensetzung, umfassend:
1) ein Pfropfcopolymer, umfassend:
a) Polyalkylenoxid, das ein emittlere Molmasse von 1000 bis 20.000 Dalton aufweist und auf Ethylenoxid, Propylenoxid, Butylenoxid oder Mischungen davon basiert;
b) N-Vinylpyrrolidon; und
c) Vinylester, der von einer gesättigten Monocarbonsäure abgeleitet ist, die 1 bis 6 Kohlenstoffatome enthält, und/oder einen Methyl- oder Ethylester von Acryl- oder Methacrylsäure;
wobei das Gewichtsverhältnis von (a) : (b) 1 : 0,1 bis 1 : 2 beträgt und
wobei die Menge, bezogen auf das Gewicht, von (a) größer als die Menge von (c) ist;
2) ein Farbübertragungshemmer-Polymer (DTI-Polymer), das ausgewählt ist aus der Gruppe bestehend aus: Polyvinylimidazol-Polymeren (PVI-Polymeren), Copolymeren von N-Vinylpyrrolidon und N-Vinylimidazole (PVP/PVI) und beliebigen Mischungen davon.

2. Wäschewaschmittelzusammensetzung nach Anspruch 1, wobei in dem Pfropfpolymer
a) das Polyalkylenoxid Ethylenoxideinheiten umfasst und vorzugsweise daraus besteht und
c) der Vinylester Vinylacetat umfasst und vorzugsweise daraus besteht.

3. Wäschewaschmittelzusammensetzung nach Anspruch 1, wobei in dem Pfropfpolymer
a) das Polyalkylenoxid Ethylenoxideinheiten und Propylenoxideinheiten umfasst und vorzugsweise daraus besteht, und
c) der Vinylester Vinylacetat umfasst und vorzugsweise daraus besteht.

4. Wäschewaschmittelzusammensetzung nach einem der vorstehenden Ansprüche, wobei das Polyalkylenoxid eine mittlere Molmasse von 2000 bis 15.000 Dalton aufweist.

5. Wäschewaschmittelzusammensetzung nach einem der vorstehenden Ansprüche, wobei in dem Pfropfpolymer das Gewichtsverhältnis von (a) : (c) von 1,0 : 0,1 bis 1,0 : 0,99 beträgt, vorzugsweise von 1,0 : 0,3 bis 1,0 : 0,9.

6. Wäschewaschmittelzusammensetzung nach einem der vorstehenden Ansprüche, wobei das Pfropfpolymer ein durchschnittliches Molekulargewicht von 4.000 Da bis 100.000 Da, vorzugsweise 5.000 Da bis 100.000 Da, mehr bevorzugt von 5.000 Da bis 50.000 Da, am meisten bevorzugt von 8.000 Da bis 20.000 Da aufweist.

7. Wäschewaschmittelzusammensetzung nach einem der vorstehenden Ansprüche, wobei die Zusammensetzung umfasst:
von etwa 0,01 Gew.-% bis etwa 15 Gew.-%, vorzugsweise von etwa 0,05 Gew.-% bis etwa 10 Gew.-%, mehr bevorzugt von etwa 0,1 Gew.-% bis etwa 5 Gew.-% und am meisten bevorzugt von etwa 0,2 Gew.-% bis etwa 3 Gew.-% der Zusammensetzung des Pfropfcopolymers, und/oder
von etwa 0,001 Gew.-% bis etwa 1 Gew.-%, vorzugsweise von etwa 0,005 Gew.-% bis etwa 0,5 Gew.-%, mehr bevorzugt von etwa 0,008 Gew.-% bis etwa 0,2 Gew.-% und am meisten bevorzugt von etwa 0,01 Gew.-% bis etwa 0,1 Gew.-% der Zusammensetzung des DTI-Polymers.

8. Wäschewaschmittelzusammensetzung nach einem der vorstehenden Ansprüche, wobei das Gewichtsverhältnis des Pfropfcopolymers zu dem DTI-Polymer von etwa 100 : 1 bis etwa 1 : 1, vorzugsweise von etwa 70 : 1 bis etwa 3 : 1, mehr bevorzugt von etwa 50 : 1 bis etwa 7 : 1 und am meisten bevorzugt von etwa 30 : 1 bis etwa 10 : 1 beträgt.

9. Wäschewaschmittelzusammensetzung nach einem der vorstehenden Ansprüche, wobei die Zusammensetzung ferner einen Behandlungszusatzstoff umfasst, der vorzugsweise ausgewählt ist aus der Gruppe, bestehend aus einem Tensidsystem, Fettsäuren und/oder Salzen davon, Enzymen, eingekapselten Wirkstoffen, Schmutzfreisetzungspolymeren, Tömungsmitteln, Gerüststoffen, Chelatbildnern, Hemmungsmittel der Farbstoffübertragung, Dispergiermitteln, Enzymstabilisierungsmitteln, Antioxidantien, katalytischen Materialien, Bleichmitteln, Bleichkatalysatoren, Bleichaktivatoren, polymeren Dispergiermitteln, Schmutzentfernungs-/Antiwiederablagerungsmitteln, polymeren Fettreinigungsmitteln, amphiphilen Copolymeren, Aufhellern, Schaumunterdrückern, Farbstoffen, Tönungsmittlen, Duftstoffen, Strukturelastifizierungsmitteln, Weichspülern, Trägern, Füllmitteln, Hydrotropika, Lösungsmitteln, antimikrobiellen Mitteln und/oder Konservierungsmitteln, Neutralisatoren und/oder pH-Wert-Einstellmitteln, Verarbeitungshilfsmitteln, Rheologiemodifikationsmitteln und/oder Strukturmitteln, Trübungsmitteln, Perlessenzmitteln, Pigmenten, Antilkorrosionsmitteln und/oder Korrosionsschutzmitteln und Mischungen davon.

10. Wäschewaschmittelzusammensetzung nach einem der vorstehenden Ansprüche, wobei die Zusammensetzung in Form einer flüssigen Zusammensetzung, einer granulösen Zusammensetzung, eines Einkammerbeutels, eines Mehrkammerbeutels, eines Tuchs, einer Pastille oder eines Kügelchens, eines faserigen Artikels, einer Tablette, eines Riegels, einer Flocke oder einer Mischung davon vorliegt.

11. Verwendung einer Wäschewaschmittelzusammensetzung zum Verbessern des Farbschutzes, vorzugsweise Verringern des Ausbleichens von Farbe und/oder einer Farbübertragung auf mitgewaschene Textilien während eines Waschvorgangs, wobei die Wäschewaschmittelzusammensetzung umfasst:
1) ein Pfropfcopolymer, umfassend:
a) Polyalkylenoxid, das eine mittlere Molmasse von 1000 bis 20.000 Dalton aufweist und auf Ethylenoxid, Propylenoxid, Butylenoxid oder Mischungen davon basiert;
b) N-Vinylpyrrolidon; und
c) Vinylester, der von einer gesättigten Monocarbonsäure abgeleitet ist, die 1 bis 6 Kohlenstoffatome enthält, und/oder einen Methyl- oder Ethylester von Acryl- oder Methacrylsäure;
wobei das Gewichtsverhältnis von (a) : (b) 1 : 0,1 bis 1 : 2 beträgt und
wobei die Menge, bezogen auf das Gewicht, von (a) größer als die Menge von (c) ist;
2) ein Farbübertragungshemmer-Polymer (DTI-Polymer), das ausgewählt ist aus der Gruppe bestehend aus: Polyvinylimidazol-Polymeren (PVI-Polymeren), Copolymeren von N-Vinylpyrrolidon und N-Vinylimidazole (PVP/PVI) und beliebigen Mischungen davon.

## Revendications

1. Composition détergente pour le lavage de linge comprenant :
1) un polymère greffé comprenant :
a) un oxyde de polyalkylène qui a une masse moléculaire moyenne en nombre allant de 1 000 à 20 000 Daltons et est basé sur l'oxyde d'éthylène, l'oxyde de propylène, ou l'oxyde de butylène ou des mélanges de ceux-ci ;
b) une N-vinylpyrrolidone ; et
c) un ester vinylique dérivé d'un acide monocarboxylique saturé contenant de 1 à 6 atomes de carbone et/ou un ester méthylique ou éthylique d'acide acrylique ou méthacrylique ;
dans laquelle le rapport en poids de (a):(b) va de 1:0,1 à 1:2, et
dans laquelle la quantité, en poids, de (a) est supérieure à la quantité de (c) ;
2) un polymère inhibiteur de décoloration (DTI) qui est choisi dans le groupe constitué : de polymères de polyvinylimidazoles (PVI), de copolymères de N-vinylpyrrolidone et de N-vinylimidazole (PVP/PVI), et tout mélange de ceux-ci.

2. Composition détergente pour le lavage de linge selon la revendication 1, dans laquelle, dans le polymère greffé
a) l'oxyde de polyalkylène comprend des motifs d'oxyde d'éthylène et est de préférence constitué de ceux-ci, et
c) l'ester vinylique comprend de l'acétate de vinyle et est de préférence constitué de celui-ci.

3. Composition détergente pour le lavage de linge selon la revendication 1, dans laquelle, dans le polymère greffé
a) l'oxyde de polyalkylène comprend et, de préférence, est constitué de motifs d'oxyde d'éthylène et de motifs d'oxyde de propylène, et
c) l'ester vinylique comprend de l'acétate de vinyle et est de préférence constitué de celui-ci.

4. Composition détergente pour le lavage de linge selon une quelconque revendication précédente, dans laquelle l'oxyde de polyalkylène a une masse moléculaire moyenne en poids allant de 2 000 à 15 000 Daltons.

5. Composition détergente pour le lavage de linge selon l'une quelconque revendication précédente, dans laquelle, dans le polymère greffé, le rapport en poids de (a):(c) va de 1,0:0,1 à 1,0:0,99, de préférence de 1,0:0,3 à 1,0:0,9.

6. Composition détergente pour le lavage de linge selon l'une quelconque des revendications précédentes, dans laquelle le polymère greffé a une masse moléculaire moyenne en poids allant de 4 000 Da à 100 000 Da, de préférence allant de 5 000 Da à 100 000 Da, plus préférablement allant de 5 000 Da à 50 000 Da, le plus préférablement de 8 000 Da à 20 000 Da.

7. Composition détergente pour le lavage de linge selon l'une quelconque des revendications précédentes, dans laquelle la composition comprend :
d'environ 0,01 % à environ 15 %, de préférence d'environ 0,05 % à environ 10 %, plus préférablement d'environ 0,1 % à environ 5 %, le plus préférablement d'environ 0,2 % à environ 3 % en poids de la composition, du copolymère greffé, et/ou
d'environ 0,001 % à environ 1 %, de préférence d'environ 0,005 % à environ 0,5 %, plus préférablement d'environ 0,008 % à environ 0,2 %, et le plus préférablement d'environ 0,01 % à environ 0,1 % en poids de la composition, du polymère DTI.

8. Composition détergente pour le lavage de ligne selon l'une quelconque des revendications précédentes, dans laquelle le rapport pondéral du copolymère greffé au polymère DTI va d'environ 100:1 à environ 1:1, de préférence d'environ 70:1 à environ 3:1, plus préférablement d'environ 50:1 à environ 7:1, et le plus préférablement d'environ 30:1 à environ 10:1.

9. Composition détergente pour le lavage de linge selon l'une quelconque des revendications précédentes, dans laquelle la composition comprend en outre un traitement adjuvant qui est de préférence choisi parmi le groupe constitué d'un système tensioactif, d'acides gras et/ou de sels de ceux-ci, d'enzymes, d'agents bénéfiques encapsulés, de polymères facilitant l'élimination des salissures, d'agents huileux, d'adjuvants, d'agents chélatants, d'agents inhibant le transfert de colorants, de dispersants, de stabilisants enzymatiques, d'antioxydants, de matériaux catalytiques, d'agents de blanchiment, de catalyseurs de blanchiment, d'activateurs de blanchiment, d'agents dispersants polymères, d'agents d'élimination des salissures/anti-redéposition, d'agents polymériques de nettoyage des graisses, de copolymères amphiphiles, d'azurants, de suppresseurs de mousse, de colorants, d'agents huileux, de parfum, d'agents d'élasticité de la structure, d'assouplissants pour tissus, de supports, de charges, d'hydrotropes, de solvants, d'agents antimicrobiens et/ou conservateurs, de neutralisants et/ou d'agents d'ajustement du pH, d'auxiliaires technologiques, de modificateurs de rhéologie et/ou de structurants, d'opacifiants, d'agents nacrés, de pigments, d'agents anticorrosion et/ou d'anti-ternissement et de mélanges de ceux-ci.

10. Composition détergente pour le lavage de linge selon l'une quelconque des revendications précédentes, dans laquelle la composition est sous la forme d'une composition liquide, d'une composition granulaire, d'un sachet à compartiment unique, d'un sachet à compartiments multiples, d'une feuille, d'une pastille ou d'une perle, d'un article fibreux, d'un article solide, d'une tablette, d'un pain, d'une paillette, ou d'un mélange de ceux-ci.

11. Utilisation d'une composition détergente pour le lavage de linge permettant d'améliorer la protection de couleur, réduisant de préférence la décoloration et/ou le transfert de colorant vers des tissus co-lavés pendant le lavage de linge, dans laquelle la composition détergente pour le lavage de linge comprend :
1) un polymère greffé comprenant :
a) un oxyde de polyalkylène qui a une masse moléculaire moyenne en nombre allant de 1 000 à 20 000 Daltons et est basé sur l'oxyde d'éthylène, l'oxyde de propylène, ou l'oxyde de butylène ou des mélanges de ceux-ci ;
b) une N-vinylpyrrolidone ; et
c) un ester vinylique dérivé d'un acide monocarboxylique saturé contenant de 1 à 6 atomes de carbone et/ou un ester méthylique ou éthylique d'acide acrylique ou méthacrylique ;
dans laquelle le rapport en poids de (a):(b) va de 1:0,1 à 1:2, et
dans laquelle la quantité, en poids, de (a) est supérieure à la quantité de (c) ;
2) un polymère d'inhibiteur de décoloration (DTI) qui est choisi dans le groupe constitué : de polymères de polyvinylimidazoles (PVI), de copolymères de N-vinylpyrrolidone et de N-vinylimidazole (PVP/PVI) et tout mélange de ceux-ci.
